Europäisches Patentamt

European Patent Office

Office européen des brevets

(19)

(11) Veröffentlichungsnummer: **0 244 608 B1**

(12) **EUROPÄISCHE PATENTSCHRIFT**

(45) Veröffentlichungstag der Patentschrift: **31.07.91**

(51) Int. Cl.⁵: **C08L 75/00, C09J 175/04**

(21) Anmeldenummer: **87104140.6**

(22) Anmeldetag: **20.03.87**

(54) **Reaktiver Schmelzklebstoff.**

(30) Priorität: **09.05.86 CH 1902/86**

(43) Veröffentlichungstag der Anmeldung:
**11.11.87 Patentblatt 87/46**

(45) Bekanntmachung des Hinweises auf die
Patenterteilung:
**31.07.91 Patentblatt 91/31**

(84) Benannte Vertragsstaaten:
**AT BE CH DE ES FR GB IT LI LU NL SE**

(56) Entgegenhaltungen:
**EP-A- 0 043 050**
**EP-A- 0 107 097**
**DE-A- 1 720 901**
**US-A- 4 361 676**

(73) Patentinhaber: **Sika AG, vorm. Kaspar Winkler & Co.**
**Tüffenwies 16-22**
**CH-8048 Zürich(CH)**

(72) Erfinder: **Merz, Peter W., Dr.**
**Alte Landstrasse 99**
**CH-8803 Rüschlikon(CH)**
Erfinder: **Zabel, Lutz**
**Ruggenstrasse 26**
**CH-8903 Birmensdorf(CH)**
Erfinder: **Fischer, Christian**
**Gugolzstrasse 8**
**CH-8004 Zürich(CH)**

(74) Vertreter: **Blum, Rudolf Emil Ernst et al**
**c/o E. Blum & Co Patentanwälte Vorderberg 11**
**CH-8044 Zürich(CH)**

EP 0 244 608 B1

## Beschreibung

Die vorliegende Erfindung bezieht sich auf einen reaktiven Schmelzklebstoff.

Traditionell sind Schmelzklebstoffe (Hot Melts) thermoplastische Materialien, die zur Verarbeitung in einer Pistole oder einer anderen Vorrichtung auf 90-200° C erhitzt und als flüssige Masse auf die zu verklebenden Substrate aufgetragen werden.

Beim Erkalten erstarrt die Masse und bildet so rasch eine feste Verklebung.

Das schnelle Verfestigen und das Fehlen von Wasser und Lösungsmitteln bevorteilen diese Schmelzkleber gegenüber anderen Klebstoffsystemen.

Als ein Nachteil hat sich ihr thermoplastisches Verhalten erwiesen, da ihre mechanischen und somit haftenden Eigenschaften stark temperaturabhängig sind. Bei erhöhter Temperatur erweichen sie wieder und neigen bei tiefer Temperatur zur Versprödung, weshalb sie nur in einem eher engen Temperaturbereich eingesetzt werden.

In den letzten Jahren sind reaktive Polyurethanen-Schmelzklebstoffe auf dem Markt eingeführt worden. Diese zeichnen sich dadurch aus, dass sie nach Vernetzung ihre Thermoplastizität verlieren und gute mechanische Eigenschaften in einem breiten Temperaturbereich liefern. Die Vernetzung der reaktiven Isocyanatgruppen kann mittels Wasser, insbesondere Luftfeuchtigkeit, oder durch eine durch Wärme freigesetzte H-aktive Verbindung erfolgen.

Die bekannten lösungsmittelfreien, feuchtigkeitshärtenden präpolymeren Isocyanate sind bei Raumtemperatur flüssig bis weich-wachsähnlich und haben aufgrund ihrer niedrigen Anfangsfestigkeit und der langen Reaktionszeit nur begrenzte Einsatzmöglichkeiten.

Aus der DE-PS 24 01 320 sind isocyanathaltige Schmelzkleber bekannt, welche zusammengesetzt sind aus:

a) 20 bis 73 Gew.-% eines Urethan-Präpolymeren mit terminalen Isocyanat-Gruppen der beiden Enden,

b) 2 bis 25 Gew.-% eines thermoplastischen Polymeren aus der Gruppe der Aethylen-Vinylacetat-Copolymeren, der Aethylen-Acrylsäure-Copolymeren, der AethylenAcrylat-Copolymeren, des ataktischen Polypropylens und der linearen Polyäthylenterephthalat-Polymeren sowie

c) 25 bis 55 Gew.-% eines klebrigmachenden Harzes wie Kolophoniumderivate oder Terpenphenol-Copolymere.

Gemische aus diesen Komponenten neigen aber bei bestimmten Mischungsverhältnissen zur Unverträglichkeit und zur Instabilität der Schmelzen und besitzen ungenügende Standfestigkeiten. Ebenfalls ist ihre Lagerstabilität oft nicht ausreichend.

In der DE-OS 32 36 313 sind reaktive Schmelzkleber beschrieben, welche verträgliche, schmelzstabile, unter Luftfeuchtigkeitsausschluss lagerstabile Mischungen darstellen und eine grosse Anfangshaftfestigkeit und eine hohe Thermostabilität aufweisen. Diese reaktiven Schmelzkleber wurden entwickelt für die Verklebung von thermoplastischen und duroplastischen Kunststoffen, Schaumstoffen, lackierten Oberflächen, Holz, Papier, Leder, Gummi, Textilien, Metalle, usw. und bestehen aus einer Mischung aus:

a) 20 bis 90 Gew.-% eines präpolymeren Isocyanats,

b) 0 bis 75 Gew.-% eines thermoplastischen Polyurethans sowie

c) 5 bis 50 Gew.-% eines niedrigmolekularen Kunstharzes aus der Gruppe der Ketonharze und/oder Keton-Aldehyd-Kondensationsharze und/oder Hydrierungsprodukte von Acetophenon-Kondensationsharzen.

Diese reaktiven Schmelzkleber mit den oben angegebenen Mischungsmöglichkeiten sind beim Auftrag wenig standfest - d.h. eine Auftragsdicke von mehr als 2 mm kann nicht gewährleistet werden -,stark klebrig und fädig, und nach Abkühlung zäh und schlecht plastisch verformbar. Ihr Einsatz ist somit auf bestimmte Anwendungsgebiete begrenzt.

Aufgabe der vorliegenden Erfindung ist es, diesen unzulänglichen Stand der Technik zu überwinden und reaktive Schmelzklebstoffe zu entwickeln, die beim Auftrag standfest, nach Abkühlung auf Raumtemperatur anfassbar und plastisch verformbar sind und nach der Vernetzung mit Wasser, insbesondere Luftfeuchtigkeit, gute mechanische, gummi- bis zähelastische und haftende Eigenschaften unabhängig von der Applikationstemperatur, d.h. der Schmelz- bzw. Raumtemperatur besitzen. Aufgrund seiner Standfestigkeit bei Applikation ist ein erweitertes Anwendungsgebiet zugänglich, insbesondere Klebungen im Autoindustriebereich z.B. Einkleben von Windschutzscheiben, Ankleben von Kunststoffleisten usw., und Klebungen im Schiffsbau, z.B. Verkleben von Holzteilen.

Es ist eine weitere Aufgabe der vorliegenden Erfindung, ein Verfahren zur Herstellung des erfindungsgemässen Schmelzklebstoffes zur Verfügung zu stellen.

Gegenstand der Erfindung ist ein reaktiver, nach dem Abkühlen noch zähplastisch verformbarer

2

Schmelzklebstoff enthaltend ein Gemisch aus:
- 20 bis 90 Gew.-% wenigstens eines thermoplastischen Polyurethanharzes, welches aus folgenden Einzelkomponenten aufgebaut ist:

a) aromatischen Diisocyanaten und/oder

b) aliphatischen oder cycloaliphatischen Diisocyanaten und

c) Polyolen mit einem Molekulargewichtbereich von 400 bis 10000 mit jeweils endständigen primären und/oder sekundären OH-Gruppen und/oder

d) Kurzkettigen Diolen mit endständigen primären und/oder sekundären OH-Gruppen

- 5 bis 40 Gew % wenigstens eines Bindemittels auf Isocyanatbasis mit einem Isocyanatgehalt bezogen auf den gesamten Schmelzklebstoff, im Bereich von 0,01 bis 10 Gew.-% und

- 3 bis 30 Gew.-% wenigstens eines Thixotropiermittels ausgewählt aus der Gruppe bestehend aus Bentone, Ruß, Kieselsäurederivate, gefällte Kreiden und Harnstoffderivate.

Zusätzlich können in den erfindungsgemässen Schmelzklebstoffen wenigstens ein Weichmacher, wenigstens ein Füllstoff und wenigstens ein Zusatzstoff, wie Haftvermittler, Katalysatoren usw., eingemischt sein.

Bevorzugte Ausführungsformen des erfindungsgemässen Schmelzklebstoffes sind in den abhängigen Ansprüchen definiert.

Das erfindungsgemässe Verfahren zur Herstellung des erfindungsgemässen reaktiven Schmelzklebstoffes ist dadurch gekennzeichnet, dass man unter wasserfreien Bedingungen entweder ein thermoplastisches Material vorlegt oder es in situ erzeugt, dann bis zum Erweichungspunkt erwärmt, danach das Bindemittel auf Isocyanatbasis und das Thixotropiermittel homogen einmischt und das so hergestellte Gemisch auf Umgebungstemperatur erkalten lässt, wobei das Mischungsverhältnis von genanntem thermoplastischem Material und genanntem Bindemittel derart gewählt wird, dass der Isocyanatgehalt, bezogen auf den gesamten Schmelzklebstoff, im Bereich von 0.01 bis l0 Gew.-% liegt.

Bevorzugte Ausführungsformen des erfindungsgemässen Verfahrens sind in den abhängigen Verfahrensansprüchen definiert.

Der erfindungsgemässe reaktive Schmelzklebstoff kann zum Verkleben und/oder Abdichten von einem oder mehreren Materialien gleicher oder ungleicher Beschaffenheit zu einem Verbund verwendet werden.

Bevorzugte Verwendungen der erfindungsgemässen Schmelzklebstoffes sind in den abhängigen Verwendungsansprüchen definiert.

Neben dem direkten Auftrag bei der Erweichungstemperatur kann z.B. auch dieser reaktive Schmelzklebstoff mit Hilfe eines Extruders zu einem Profil beliebiger Form, wie z.B. eine Schnur, ein Band, usw., bei erhöhter Temperatur verformt werden.

Zur Verklebung kann die Applikation dieser vorgeformten Schnüre ohne maschinellen Aufwand durch Auflegen von Hand erfolgen und ist im Vergleich zum Aufwand bei pastösen Materialien weit kostengünstiger, qualitätssicherer, schneller und sauberer.

Diese reaktiven Schnüre können schneckenförmig aufgerollt und in einem Aluminiumbeutel als Wasserdampfbarriere lagerungsfähig verpackt werden und finden somit auch Eingang im Do-it-yourself-Markt.

Das nachfolgende Ausführungsbeispiel dient der Illustration der Erfindung. Die Angabe der Teile beziehen sich auf das Gewicht.

Ausführungsbeispiel

I. Beschreibung der Herstellung des Polyurethanthermoplastes

In einer Mischung aus 2400 Teilen eines Polyoxypropylenetherdiols vom Molekulargewicht 2000, 320 Teilen Diisooctylphthalat und 4 Teilen einer 5 %igen l,4-Diazabicyclo[2.2.2]-octan (DABCO) in Diisooctylphthalat-Lösung werden bei Raumtemperatur 697,6 Teile 4,4'-Diphenylmethandiisocyanat suspendiert und die Suspension unter Rühren und Luftfeuchtigkeitsausschluss auf 80o C erwärmt, wobei das kristalline 4,4'-Diphenylmethandiisocyanat in Lösung geht.

Nach ca. l50 Minuten werden l07,8 Teile l,4-Butandiol zugegeben und die Reaktionsmischung nach Temperaturerhöhung auf ca. l00° C bis zur Konsistenz des Isocyanatgehaltes, ca. l Stunde, gerührt.

2. Beschreibung der Herstellung des reaktiven Schmelzklebstoffes

Bei einer Temperatur von l00˚ C werden zum oben beschriebenen Thermoplast nacheinander 894,8 Teile eines präpolymeren Isocyanats, das einen Isocyanatgehalt von 2,23 % aufweist und aus den Komponenten Polyoxypropylenethertriol vom Molekulargewicht von 5000 und 4,4'-Diphenylmethandiisocyanat aufgebaut ist, 20 Teile einer silanhaltigen Verbindung und 490 Teile bei l30˚ C getrockneter Russ eingemischt. Diese so hergestellte, nicht fädige Masse ist bei der Herstellungstemperatur leicht klebrig und standfest, und bei Raumtemperatur gut anfassbar und plastisch verformbar.

Folgende analytische Daten wurden nach 2-wöchiger Lagerung der Masse bei 23˚ C und 50 % relativer Luftfeuchtigkeit ermittelt:

Härte Shore A : 40 (DIN 53505)

Zugfestigkeit $[N/mm2]$ : 7,7 (DIN 53504)

Bruchdehnung $[\%]$ : 936 (DIN 53504)

Bruchspannung $[N/mm2]$ : 7,7 (DIN 53504)

Weiterreissfestigkeit $[N/mm2]$ : 16,8 (DIN 53515)

Zugscherfestigkeit $[N/mm2]$ : > 5 kohäsiver Bruch

(Probekörper wurden mit in Inertgasatmosphäre auf Raumtemperatur abgekalteter, in Raupen vorgeformter Masse hergestellt)

Haftung Kitt auf Kitt : ist gewährleistet

offene Liegezeit der
Raupen : ca. 20 Minuten

spez. Durchgangswiderstand $\delta$ D $[\Omega \, cm]$ $4,8 \cdot 10^{11}$ (DIN 53482)

Oberflächenwiderstand $R_D$ $[\Omega]$ $1,6 \cdot 10^{12}$ (DIN 53482)

Die ausgehärtete Masse ist überstreichbar.

Gebrauchstemperatur : $-40^\circ$ C bis $+90^\circ$ C
$(temporär bis +150^\circ C)$

**Patentansprüche**

1. Reaktiver, nach dem Abkühlen noch zähplastisch verformbarer Schmelzklebstoff enthaltend ein Gemisch aus:
   - 20 bis 90 Gew.-% wenigstens eines thermoplastischen Polyurethanharzes, welches aus folgenden Einzelkomponenten aufgebaut ist:

a) aromatischen Diisocyanaten und/oder

b) aliphatischen oder cycloaliphatischen Diisocyanaten und

c) Polyolen mit einem Molekulargewichtbereich von 400 bis 10000 mit jeweils endständigen primären und/oder sekundären OH-Gruppen und/oder

d) Kurzkettigen Diolen mit endständigen primären und/oder sekundären OH-Gruppen

- 5 bis -0 Gew % wenigstens eines Bindemittels auf Isocyanatbasis mit einem Isocyanatgehalt bezogen auf den gesamten Schmelzklebstoff, im Bereich von 0,01 bis 10 Gew.-% und

- 3 bis 30 Gew.-% wenigstens eines Thixotropiermittels ausgewählt aus der Gruppe bestehend aus Bentone, Ruß, Kieselsäurederivate, gefällte Kreiden und Harnstoffderivate.

2. Schmelzklebstoff nach Anspruch 1, dadurch gekennzeichnet, daß er

- 50 bis 65 Gew.-%, wenigstens eines thermoplastischen Materials,

- 15 bis 30 Gew.-%, wenigstens eines Bindemittels auf Isocyanatbasis, und

- 8 bis 20 Gew.-%, wenigstens eines Thixotropiermittels enthält.

3. Schmelzklebstoff nach einem der Ansprüche 1 bis 2, dadurch gekennzeichnet, daß der Isocyanatgehalt im Bereich von 0,1 bis 1 Gew.-%, insbesondere von 0,3 bis 0,7 Gew.-%, liegt.

4. Schmelzklebstoff nach einem der Ansprüche 1 bis 3, dadurch gekennzeichnet, daß

als a) aromatische Diisocyanate 4,4'-Diphenylmethandiisocyanat, 2,4-Toluoldiisocyanat, Naphthylen-1,5-diisocyanat, 1,3- und 1,4-Phenylendiisocyanat,

als b) aliphatische oder cycloaliphatische Diisocyanate Hexamethylen-diisocyanat, 1,12-Dodecandiisocyanat, Cyclobutan-1,3-diisocyanat, Cyclohexan-1,3-und -1,4-diisocyanat, 1-Isocyanato-3,3,5-trimethyl-5-iso-cyanatomethylcyclohexan, 2,4- und 2,6-Hexahydrotoluylen-diisocyanat, Hexahydro-1,3- und -1,4-phenyldiisocyanat, Perhydro-2,4'- und 4,4'-diphenylmethandiisocyanat,

als c) Polyole lineare oder verzweigte

- Polybutadiene,

- Polycarbonate,

- Polycaprolactone,

- Polycaprolactame,

- Polyether, beispielsweise Polyethylenoxide, Polypropylenoxide, Polybutylenoxide, Polystyroloxide, Polyepichlorhydrine, Polytetrahydrofurane,

- Polyester, beispielsweise beliebige Kondensationsprodukte von mehrwertigen Alkoholen - z.B. Ethylen-glycol, Propylenglykol-1,2 und -1,3, Butylenglykol-1,4 und -2,3, Hexandiol-1,6, Octandiol-1,8, Glycerin, Trimethylolpropan, Pentaerythrit, Chinit, Mannit und Sorbit, Methylglycosid, Diethylenglykol, Polyethylenglykole, Di-propylenglykol, Polypropylenglykole - mit mehrwertigen Carbonsäuren und/oder Carbonsäureanhydriden und/oder Carbonsäureestern, - z.B. Bernsteinsäure, Adipinsäure, Korksäure, Azelainsäure, Sebacinsäure, Phthalsäure, Isophthalsäure, Trimellitsäure, Phthalsäureanhydrid, Tetra-hydrophthalsäureanhydrid, Tetrachlorphthals-äureanhydrid, Glutarsäureanhydrid, Maleinsäureanhydrid, Fumarsäure, Terephthalsäuredime-thylester und Terephthalsäure-bis-glykolester,

jeweils solche mit einem Molekulargewichtsbereich von 1000 bis 5000, wobei die OH-Funktionalität vorzugsweise im Bereich um 2 liegt, und als

d) kurzkettige Diole Ethylenglykol, bis-Hexandiol-1,6-, Propylenglykol, bis-Hexapropylenglykol, Diethylenglykol, bis-Hexaethylenglykol eingesetzt werden

5. Schmelzklebstoff nach einem der Ansprüche 1 bis 4, dadurch gekennzeichnet, daß das Bindemittel aus der Gruppe der reaktiven Polyurethanpräpolymeren ausgewählt und aus folgenden Einzelkomponenten aufgebaut ist:

a) aromatischen Diisocyanaten, wie z.B. 4,4'-Diphenylmethandiisocyanat, 2,4-Toluoldiisocyanat, Naphthylen-1,5-diisocyanat, 1,3- und 1,4-Phenylendiisocyanat, Triphenylmethan-4,4',4"-triisocyanat, Polyphenyl-polymethylenpolyisocyanate, und/oder

b) aliphatischen oder cycloaliphatischen Diisocyanaten, wie z.B. Hexamethylen-diisocyanat, 1,12-Dodecan-diisocyanat, Cyclobutan-1,3-diisocyanat, Cyclohexan-1,3-und -1,4-diisocyanat, 1-Isocyanato-3,3,5-trimethyl-5-iso-cyanatomethylcyclohexan, 2,4- und 2,6-Hexahydrotoluylen-diisocyanat, Hexahydro-1,3- und -1,4-phenyldiisocyanat, Perhydro-2,4'- und -4,4'-diphenylmethandiisocyan-

5

at, und

c) Polyolen mit einem Molekulargewichtsbereich von 400 bis 10000, vorzugsweise von 1000 bis 5000, wie z.B. linearen oder verzweigten

- Polybutadienen,
- Polycarbonaten,
- Polycaprolactonen,
- Polycaprolactamen,
- Polyethern, beispielsweise Polyethylenoxide, Polypropylenoxide, Polybutylenoxide, Polystyroloxide, Polyepichlorhydrine, Polytetrahydrofurane,
- Polyestern, beispielsweise beliebige Kondensationsprodukte von mehrwertigen Alkoholen - z.B. Ethylen-glycol, Propylenglykol-1,2 und -1,3, Butylenglykol-1,4 und -2,3, Hexandiol-1,6, Octandiol-1,8, Glycerin, Trimethylolpropan, Pentaerythrit, Chinit, Mannit und Sorbit, Methylglycosid, Diethylenglykol, Polyethylenglykole, Di-propylenglykol, Polypropylenglykole - mit mehrwertigen Carbonsäuren und/oder Carbonsäureanhydriden und/oder Carbonsäureestern, - z.B. Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Tetrachlorphthalsäureanhydrid, Glutarsäureanhydrid, Maleinsäureanhydrid, Fumarsäure, Terephthalsäuredimethylester und Terephthalsäure-bis-glykolester -

mit jeweils wenigstens 2 endständigen primären und/oder sekundären OH-Gruppen,

d) kurzkettigen Diolen mit endständigen primären und/oder sekundären OH-Gruppen, wie z.B. Ethylenglykol, bis-Hexandiol-1,6, Propylenglykol, bis-Hexapropylenglykol, Diethylenglykol, bis-Hexaethylenglykol, und/oder

e) Vernetzern, wie z.B. Trimethylolpropan, Glyzerin, Hexantriol, Triethanolamin, Sorbit, Mannit, Sucrose, Ethylenamin, Ethanolamin, Hexamethylenamin, Pentaerythrit.

6. Schmelzklebstoff nach einem der Ansprüche 1 bis 5, dadurch gekennzeichnet, daß er zusätzlich noch

- wenigstens einen Weichmacher, vorzugsweise in einer Menge von 2 bis 30 Gew.-%, insbesondere in einer Menge von 5 bis 10 Gew.-%, und/oder
- wenigstens einen Füllstoff, vorzugsweise in einer Menge von 5 bis 50 Gew.-%, insbesondere in einer Menge von 8 bis 15 Gew.-%, und/oder
- wenigstens einen Zusatzstoff, vorzugsweise in einer Menge von 0,001 bis 5 Gew.-%,

enthält, wobei sich die genannten Prozentangaben auf den gesamten Schmelzklebstoff beziehen.

7. Schmelzklebstoff nach Anspruch 6, dadurch gekennzeichnet, daß

- der Weichmacher ausgewählt ist aus der Gruppe, bestehend aus Phthalaten, wie etwa Dibutyl-, Dioctyl-, Dicyclohexyl-, Diisooctyl-, Diisodecyl-, Dibenzyl- oder Butylbenzylphthalat, Phosphaten mit bis zu 8 C-Atomen im Alkylrest, wie Trioctylphosphat; epoxyhaltige Weichmacher, Toluolsulfonamiden, Chlorparaffinen, Adipinsäureestern, Rizinusölen;
- der Füllstoff ausgewählt ist aus der Gruppe mit Kieselsäurederivate, Gips, Talkum, Aktivkohle, Metallpulver, Kreide, Keoline, Ruße;
- der Hilfs- bzw. Zusatzstoff ausgewählt ist aus

a) Haftvermittlern, insbesondere Silan-haltige Verbindungen, welche zusätzlich noch wenigstens eine reaktive Gruppe, wie Epoxy-, Isocyanat-, Amin-, Doppelbindungsgruppen, enthalten können,

b) Farbstoffen oder Pigmenten,

c) üblichen Polyurethankatalysatoren, wie Blei-und/oder Zinnverbindungen, gegebenenfalls unter Mitverwendung weiterer Polyurethankatalysatoren, insbesondere von tert. Amin-haltigen Katalysatoren,

d) UV-Absorptionsmitteln oder Stabilisatoren, wie phenolische Antioxidantien, Lichtschutzmitteln,

e) oberflächenaktiven Zusatzstoffen, wie Emulgatoren,

f) Flammschutzmitteln, und

g) fungistatisch und/oder bakteriostatisch wirkenden Substanzen.

8. Verfahren zur Herstellung eines reaktiven Schmelzklebstoffes nach einem der Ansprüche 1 bis 7, dadurch gekennzeichnet, daß man unter wasserfreien Bedingungen entweder das thermoplastische Material vorlegt oder es in situ erzeugt, dann bis zum Erweichungspunkt erwärmt, danach das Bindemittel auf Isocyanatbasis und das Thixotropiermittel homogen einmischt und das so hergestellte Gemisch auf Umgebungstemperatur erkalten lässt, wobei das Mischungsverhältnis von genanntem thermoplastischem Material und genanntem Bindemittel derart gewählt wird, dass der Isocyanatgehalt,

# EP 0 244 608 B1

bezogen auf den gesamten Schmelzklebstoff, im Bereich von 0,01 bis 10 Gew.-% liegt.

9. Verfahren nach Anspruch 8, dadurch gekennzeichnet, daß entweder das thermoplastische Material und/oder das Bindemittel wenigstens einen Weichmacher enthält.

10. Verfahren nach Anspruch 9, dadurch gekennzeichnet, daß das thermoplastische Material in situ mit wenigstens einem Weichmacher hergestellt wird.

11. Verfahren nach einem der Ansprüche 8 bis 10, dadurch gekennzeichnet, daß man vor dem Abkühlen auf Umgebungstemperatur nacheinander noch wenigstens einen Zusatzstoff und/oder wenigstens einen Füllstoff homogen einmischt.

12. Verwendung des reaktiven Schmelzklebstoffes nach einem der Ansprüche 1 bis 7, zum Verkleben und/oder Abdichten von einem oder mehreren Materialien gleicher oder ungleicher Beschaffenheit zu einem Verbund.

13. Verwendung nach Anspruch 12, dadurch gekennzeichnet, daß die zu verklebenden und/oder abzudichtenden Materialien ausgewählt sind aus der Gruppe, bestehend aus
   - Glas, insbesondere Fahrzeugscheiben, Verbundglasscheiben, Fassadenverglasungen,
   - Metall, welches lackiert, metallisiert oder sonstwie beschichtet und/oder vorbehandelt sein kann, z.B. Fahrzeugkarrosserien,
   - Metall-Legierung, welche lackiert, metallisiert oder sonstwie beschichtet und/oder vorbehandelt sein kann, z.B. Fahrzeugkarrosserien,
   - Kunststoff,
   - Baumaterial, insbesondere Steine, Beton, Mörtel, Strassenbeläge, und
   - Holz.

14. Verwendung nach Anspruch 12, dadurch gekennzeichnet, daß der Schmelzklebstoff am Applikationsort mittels einer Verarbeitungsvorrichtung, beispielsweise mittels einer Kartusche, welche beheizbar ist oder vorgewärmt worden ist, oder mittels einer Schmelzklebstoff-Applikationsanlage, bei einer für die Aufbringungen geeigneten, in der Nähe des Erweichungspunktes liegenden Temperatur auf die zu verklebenden und/oder abzudichtenden Materialien aufgebracht wird.

15. Verwendung nach Anspruch 12, dadurch gekennzeichnet, daß der Schmelzklebstoff in Form eines Klebeprofils bei Umgebungstemperatur auf die zu verklebenden und/oder abzudichtenden Materialien aufgebracht wird.

16. Verwendung nach Anspruch 15, dadurch gekennzeichnet, daß das Klebeprofil die Form einer Schnur oder eines Bandes hat, wobei zur Gewährleistung der Dimensionsstabilitäten ein Faden oder ein Gitter in die Schnur oder das Band einverleibt sein kann.

## Claims

1. A reactive hot melt adhesive which is still viscously plastically deformable after cooling, containing a mixture of
   - 20 to 90% by weight of at least one thermoplastic polyurethane resin which is made up of the following individual components:-
     a) aromatic di-isocyanates and/or
     b) aliphatic or cyclo-aliphatic di-isocyanates and
     c) polyols having a molecular weight in the range from 400 to 10,000 with respective terminal primary and/or secondary OH groups and/or
     d) short-chain diols with terminal primary and/or secondary OH groups
   - 5 to 40% by weight of at least one isocyanate-based binder having an isocyanate content which lies in the range from 0.01 to 10% by weight with reference to the overall hot-melt adhesive and
   - 3 to 30% by weight of at least one thixotropic agent selected from the group comprising bentonite, carbon black, silicic acid derivatives, precipitated chalks and urea derivatives.

7

2.  Hot melt adhesive according to claim 1, characterised in that it contains
    - 50 to 65% by weight, of at least one thermoplastic material,
    - 15 to 30% by weight, of at least one isocyanate-based binder, and
    - 8 to 20% by weight, of at least one thixotropic agent.

3.  Hot melt adhesive according to one of claims 1 to 2, characterised in that the isocyanate content lies in the range from 0.1 to 1% by weight, in particular from 0.3 to 0.7% by weight.

4.  Hot-melt adhesive according to one of claims 1 to 3, characterised in that
    a) as the aromatic di-isocyanate there is used 4,4' diphenylmethane-di-isocyanate, 2,4 toluene-di-isocyanate, naphthylene-1,5-di-isocyanate, 1,3 and 1,4 phenylene di-isocyanate,
    b) as the aliphatic or cyclo-aliphatic di-isocyanate there is used hexamethylene-di-isocyanate, 1,12-dodecane di-isocyanate, cyclobutane - 1, 3-di-isocyanate, cyclohexane -1,3 and -1,4 di-isocyanate, 1-isocyanato-3,3,5-trimethyl-5-isocyanato-methyl-cyclo-hexane, 2,4 and 2,6-hexahydro-toluylene di-isocyanate, hexahydro-1,3 and -1,4-phenyl di-isocyanate, perhydro-2,4'-and -4,4'-diphenyl-methane di-isocyanate
    c) as the polyol there is used a linear or branched
       - polybutadiene
       - polycarbonate
       - polycaprolactone
       - polycaprolactam
       - poly-ether, for example polyethylene oxide, polypropylene oxide, polybutylene oxide, polystyrene oxide, poly-epichlorhydrine, polytetrahydrofuran,
       - polyester, for example any desired condensation products of polyhydric alcohols, e.g. ethylene glycol, propylene glycol-1,2 and -1,3, butylene glycol-1,4 and -2,3, hexane-diol-1,6, octane diol-1,8, glycerine, trimethylenepropane, pentaerythrite, quinitol, mannitol and sorbitol, methylglycosid, di-ethylene glycol, polyethylene glycols, dipropylene glycol, polypropylene glycols - with multi-valent carboxylic acids and/or carboxylic acid anhydrides and/or carboxylic acid esters - e.g. succinic acid, adipic acid, suberic acid, azelaic acid, sebacic acid, phthalic acid, isophthalic acid, trimellitic acid, phthalic acid anhydride, tetra-hydrophthalic acid anhydride, tetrachlorophthalic acid anhydride, glutaric acid anhydride, maleic acid anhydride, fumaric acid, terephthalic acid-di-methyl ester and terephthalic acid-bis-glycol ester,
    respectively having a molecular weight range from 1000 to 5000, the OH functionality preferably lying in the region around 2, and as
    d) as the short chain diol there is used ethylene glycol, bis-hexanediol-1,6, propylene glycol, bis-hexapropylene glycol, diethylene glycol, bis-hexa-ethylene glycol.

5.  Hot melt adhesive according to one of claims 1 to 4, characterised in that the binder is selected from the group of reactive polyurethane pre-polymers and is made up of the following individual components:
    a) aromatic di-isocyanates such as for example 4,4' diphenylmethane di-isocyanate, 2,4 toluene-di-isocyanate, naphthylene-1,5-di-isocyanate, 1,3- and 1,4-phenylene di-isocyanate, triphenylmethane-4,4', 4"-tri-isocyanate, polyphenyl-polymethylene polyisocyanate, and/or
    b) aliphatic or cyclo-aliphatic di-isocyanates such as for example hexamethylene di-isocyanate, 1,12 dodecane di-isocyanate, cyclobutane-1,3 -di-isocyanate, cyclohexane-1,3 and 1,4-di-isocyanate, 1-isocyanato-3,3,5-trimethyl-5-isocyanato methyl cyclohexane, 2,4- and 2,6 hexahydrotoluylene di-isocyanate, hexahydro-1,3- and-1,4 phenyl di-isocyanate, perhydro-2.4'-and -4.4'-diphenylmethane di-isocyanate and
    c) polyols having a molecular weight range from 400 to 10,000, preferably from 1000 to 5000 such as for example linear or branched
       - polybutadienes
       - polycarbonates
       - polycaprolactones
       - polycaprolactams
       - poly-esters, for example polyethylene oxide, polypropylene oxide, polybutylene oxide, polystyrene oxide, poly-epichlorhydrine, polytetrahydrofuran,
       - polyesters, for example, any desired condensation products of polyhydric alcohols, e.g. ethylene glycol, propylene glycol-1,2 and -1,3, butylene glycol-1,4 and-2,3, hexane-diol-1,6, octane diol-1,8, glycerine, trimethylenepropane, pentaerythrite, quinitol, mannitol and sorbitol, methylglycosid, di-ethylene glycol, polyethylene glycols, dipropylene glycol, polypropylene glycols - with multi-valent carboxylic acids and/or carboxylic acid anhydrides and/or carboxylic acid esters - e.g. succinic acid, adipic acid, suberic acid, azelaic acid, sebacic acid, phthalic acid, isophthalic acid, trimellitic acid, phthalic acid anhydride, tetra-hydrophthalic acid anhydride, tetrachlorophthalic acid anhydride, glutaric acid anhydride, maleic acid anhydride, fumaric acid, terephthalic acid-di-methyl ester and terephthalic acid-bis-glycol esters with respectively at least two terminal primary and/or secondary OH groups,

d) short-chain diols with terminal primary and/or secondary OH groups such as for example ethylene glycol, bis-hexanediol-1,6, propylene glycol, bis-hexapropylene glycol, diethylene glycol, bis-hexa-ethylene glycol, and/or

e) cross-linking agents such as for example trimethylenepropane, glycerine, hexanetriol, triethanolamine, sorbitol, mannitol, sucrose, ethylenamine, ethanolamine, hexamethylenamine, pentaerythrite.

6. Hot-melt adhesive according to one of claims 1 to 5 characterised in that it contains in addition
   - at least one plasticizing agent, preferably to the extent of from 2 to 30% by weight, in particular 5 to 10% by weight and/or
   - at least one filler, preferably to the extent of 5 to 50% by weight, in particular 8 to 15% by weight, and/or
        at least one additive, preferably to the extent of 0.001 to 5% by weight,
   the stated percentages relating to the overall melt adhesive.

7. Hot-melt adhesive according to claim 6 characterised in that
   - the plasticizing agent is selected from the group comprising phthalates, such as roughly dibutyl-,-dioctyl, dicyclohexyl-, di-isooctyl-, diisodecyl-, dibenzyl-, or butylbenzylphthalate, phosphates with up to 8 carbon atoms in the alkyl group, such as trioctyl phosphate; epoxy-containing plasticizing agents, toluenesulphonamides, chloro-paraffins, adipic acid esters, castor oils;
   - the filler is selected from the group containing silicic acid derivatives, gypsum, talc, active carbon, powdered metal, chalk, kaolins, carbon black;
   - the auxiliary or additive material is selected from
     a) adhesion promoters, in particular silane-containing compounds, which could in addition contain at least one reactive group such as epoxy-, isocyanate-, amine-, unsaturated groups,
     b) dyes or pigments
     c) the usual polyurethane catalysts such as lead and/or zinc compounds, possibly with the simultaneous use of further polyurethane catalysts, in particular catalysts including tertiary amines,
     d) UV-absorbing materials or stabilizers such as phenolic anti-oxidants, light-protective media,
     e) surface-active agents such as emulsifiers,
     f) flame-retarders and
     g) fungistatic and/or bacterio-static substances.

8. Method of manufacturing a reactive hot-melt adhesive according to one of claims 1 to 7 characterised in that, under moisture-free conditions, either the thermoplastic material is present or is generated in situ, then heated to the softening point, after which the isocyanate-based binder and the thixotropic agent are mixed in homogeneously and the resulting mixture is allowed to cool to the temperature of the surroundings, the mixture ratio of the said thermoplastic material and the said binder being selected in such a way that the isocyanate content lies in the range of 0.01 to 10% by weight with reference to the overall melt adhesive.

9. Method according to claim 8 characterised in that either the thermoplastic material and/or the binder contains at least one plasticizing agent.

10. Method according to claim 9 characterised in that the thermoplastic material is manufactured in situ with at least one plasticizing agent.

11. Method according to one of claims 8 to 10 characterised in that before the cooling to the temperature of the surroundings at least one further additive material and/or at least one filler is mixed in

9

homogenously one after the other.

**12.** The use of the reactive hot-melt adhesive according to one of claims 1 to 7 for sticking and/or sealing one or more materials of the same or different characteristics to form a joint.

**13.** The use according to claim 12 characterised in that the materials to be stuck and/or sealed are selected from the group comprising
- glass, in particular vehicle windows, laminated glass screens, facade glazing,
- metal which can be painted, metallised or otherwise coated and/or pre-treated, e.g. vehicle bodies,
- metal alloy which can be painted, metallised or otherwise coated and/or pre-treated, e.g. vehicle bodies,
- plastics
- constructional material, in particular stone, concrete, mortar, road metal, and
- wood.

**14.** The use according to claim 12 characterised in that the hot-melt adhesive is applied to the materials which are to be stuck and/or sealed, at the point of application by means of a handling device, for example by means of a cartridge which can be heated or pre-heated, or by means of a hot melt-adhesive-applying installation, at a temperature suitable for application and in the neighbourhood of softening point.

**15.** The use according to claim 12 characterised in that the hot-melt adhesive is applied to the materials which are to be stuck and/or sealed in the form of an adhesive profile at the temperature of the surroundings.

**16.** The use according to claim 15 characterised in that the adhesive profile is in the form of a cord or band, into which can be incorporated a thread or a grid for achieving dimensional stability.

**Revendications**

**1.** Colle thermofusible, réactive, encore déformable ou façonnable à l'état viscoplastique après le refroidissement, contenant un mélange de
- 20 à 90% en poids d'au moins une résine de polyuréthanne thermoplastique, qui se compose des composants individuels suivants :
  a) des diisocyanates aromatiques et/ou
  b) des diisocyanates aliphatiques ou cycloaliphatiques et
  c) des polyols avec une plage de masses moléculaires de 400 à 10000, comportant à chaque fois des radicaux OH primaires et/ou secondaires, terminaux
  et/ou
  d) des diols à courte chaîne comportant des radicaux OH primaires et/ou secondaires, terminaux,
- 5 à 40% en poids d'au moins un liant à base d'isocyanate d'une teneur en isocyanate qui fluctue de 0,01 à 10% en poids, par rapport à la colle thermofusible globale
  et
- 3 à 30% en poids d'au moins un agent de thixotropie choisi dans le groupe formé par les bentones, la suie ou noir de carbone, les dérivés de l'acide silicique, les craies précipitées et les dérivés de l'urée.

**2.** Colle thermofusible suivant la revendication 1, caractérisée en ce qu'elle contient
- 50 à 65% en poids d'au moins une matière plastique,
- 15 à 30% en poids d'au moins un liant à base d'isocyanate et
- 8 à 20% en poids d'au moins un agent thixotropique.

**3.** Colle thermofusible suivant l'une des revendications 1 et 2, caractérisée en ce que la teneur en isocyanate varie dans la plage de 0,1 à 1% en poids, plus particulièrement de 0,3 à 0,7% en poids.

**4.** Colle thermofusible suivant l'une des revendications 1 à 3, caractérisée en ce que l'on utilise :
  a) à titre de diisocyanates aromatiques, le diisocyanate de 4,4'-diphénylméthane, le diisocyanate de

EP 0 244 608 B1

2,4-toluène, le 1,5-diisocyanate de naphtylène, le diisocyanate de 1,3- et de 1,4-phénylène

b) à titre de diisocyanates aliphatiques ou cycloaliphatiques, le diisocyanate d'hexaméthylène, le diisocyanate de 1,12-dodécane, le 1,3-diisocyanate de cyclobutane, le 1,3- et 1,4-diisocyanate de cyclohexane, le 1-isocyanato-3,3,5-triméthyl-5-isocyanatométhylcyclohexane, le diisocyanate de 2,4- et 2,6-hexahydrotoluylène, le diisocyanate d'hexahydro-1,3 et -1,4-phényle, le diisocyanate de perhydro-2,4'- et -4,4'-diphénylméthane

c) à titre de polyols, ceux de la gamme de masses moléculaires de 1000 à 5000, linéaires ou ramifiés,
- des polybutadiènes,
- des polycarbonates,
- des polycaprolactones,
- des polycaprolactames,
- des polyéthers, par exemple des polyoxyéthylènes, des polyoxypropylènes, des polyoxybutylènes, des poly(styrènes oxydes), des polyépichlorhydrines, des polytétrahydrofurannes,
- des polyesters, par exemple, n'importe quels produits de condensation d'alcools polyfonctionnels
- par exemple éthylène-glycol, propylène-glycol-1,2 et -1,3, butylène-glycol-1,4 et -2,3, hexanediol-1,6, octanediol-1,8, glycérine, triméthylolpropane, pentaérythrite, quinite, mannite et sorbite, méthylglycoside, diéthylène-glycol, polyéthylène-glycols, dipropylène-glycol, polypropylène-glycols
- avec des esters d'acides carboxyliques et/ou des anhydrides d'acides carboxyliques et/ou des acides carboxyliques, polyfonctionnels - par exemple l'acide succinique, l'acide adipique, l'acide subérique, l'acide azélaïque, l'acide sébacique, l'acide phtalique, l'acide isophtalique, l'acide trimellitique, l'anhydride phtalique, l'anhydride tétrahydrophtalique, l'anhydride tétrachlorophtalique, l'anhydride glutarique, l'anhydride maléique, l'acide fumarique, le téréphtalate de diméthyle et le téréphtalate de bis-glycol,

à chaque fois ceux de la gamme de masses moléculaires de 1000 à 5000 où la fonctionnalité OH se situe de préférence dans la plage qui fluctue autour de 2 et

d) à titre de diols à courte chaîne, l'éthylène-glycol, le bis-hexanediol-1,6, le propylène-glycol, le bis hexapropylène-glycol, le diéthylène-glycol, le bis-hexaéthylène-glycol.

5. Colle thermofusible suivant l'une quelconque des revendications 1 à 4, caractérisée en ce que l'on choisit le liant parmi le groupe des prépolymères polyuréthanniques réactifs et en ce qu'il est constitué des composants individuels qui suivent :

a) des diisocyanates aromatiques, tels que, par exemple, le diisocyanate de 4,4'-diphénylméthane, le diisocyanate de 2,4-toluène, le 1,5-diisocyanate de naphtylène, le diisocyanate de 1,3- et 1,4-phénylène, le 4,4',4"-triisocyanate de triphénylméthane, des polyphényl-polyméthylène-polyisocyanates et/ou

b) des diisocyanates aliphatiques ou cycloaliphatiques, tels que, par exemple, le diisocyanate d'hexaméthylène, le diisocyanate de 1,12-dodécane, le 1,3-diisocyanate de cyclobutane, le 1,3- et 1,4-diisocyanate de cyclohexane, le 1-isocyanato-3,3,5-triméthyl-5-isocyanatométhylcyclohexane, le diisocyanate de 2,4- et 2,6-hexahydrotoluylène, le diisocyanate d'hexahydro-1,3- et -1,4-phényle, le diisocyanate de perhydro-2,4'- et -4,4'-diphénylméthane et

c) des polyols avec une gamme de poids moléculaires qui varie de 400 à 10000, de préférence de 1000 à 5000, tels que, par exemple, les composés qui suivent, linéaires ou ramifiés :
- polybutadiènes,
- polycarbonates,
- polycaprolactones,
- polycaprolactames,
- des polyéthers, par exemple des polyoxyéthylènes, des polyoxypropylènes, des polyoxybutylènes, des poly(styrènes oxydes), des polyépichlorhydrines, des polytétrahydrofurannes,
- des polyesters, par exemple, n'importe quels produits de condensation d'alcools polyfonctionnels - par exemple éthylène-glycol, propylène-glycol-1,2 et -1,3, butylène-glycol-1,4 et -2,3, hexanediol-1,6, octanediol-1,8, glycérine, triméthylolpropane, pentaérythrite, quinite, mannite et sorbite, méthylglycoside, diéthylène-glycol, polyéthylène-glycols, dipropylène-glycol, polypropylène-glycols - avec des esters d'acides carboxyliques et/ou des anhydrides d'acides carboxyliques et/ou des acides carboxyliques, polyfonctionnels - par exemple l'acide succinique, l'acide adipique, l'acide subérique, l'acide azélaïque, l'acide sébacique, l'acide phtalique,

11

l'acide isophtalique, l'acide trimellitique, l'anhydride phtalique, l'anhydride tétrahydrophtalique, l'anhydride tétrachlorophtalique, l'anhydride glutarique, l'anhydride maléique, l'acide fumarique, le téréphtalate de diméthyle et le téréphtalate de bis-glycol -

avec, chaque fois, des radicaux OH terminaux, primaires et/ou secondaires,

d) des diols à courte chaîne avec des radicaux OH terminaux, primaire et/ou secondaires, tels que, par exemple, l'éthylène-glycol, le bis-hexanediol-1,6, le propylène-glycol, le bis-hexapropylène-glycol, le diéthylène-glycol, le bis-hexaéthylène-glycol et/ou

e) des agents de réticulation, tels que, par exemple, le triméthylolpropane, la glycérine, l'hexanetriol, la triéthanolamine, la sorbite, la mannite, le saccharose, l'éthylèneamine, l'éthanolamine, l'hexaméthylèneamine, la pentaérythrite.

6. Colle thermofusibe suivant l'une des revendications 1 à 5, caractérisé en ce qu'elle contient encore complémentairement
   - au moins un plastifiant, de préférence en une proportion de 2 à 30% en poids, plus particulièrement en une proportion de 5 à 10% en poids et/ou
   - au moins une charge, de préférence en une proportion de 5 à 50% en poids, plus particulièrement en une proportion de 8 à 15% en poids et/ou
   - au moins un additif, de préférence en une proportion de 0,001 à 5% en poids,
   où les pourcentages précités se rapportent à la colle thermofusible globale.

7. Colle thermofusible suivant la revendication 6, caractérisée en ce que
   - on choisit le plastifiant parmi les groupes formés des phtalates, tels que, par exemple, le phtalate de dibutyle, de dioctyle, de dicyclohexyle, de diisooctyle, de diisodécyle, de dibenzyle ou de butylbenzyle, des phosphates dont le radical alkyle comporte jusqu'à 8 atomes de carbone, comme le phosphate de trioctyle; les plastifiants contenant des radicaux époxyde, des toluènesulfonamides, des chloroparaffines, des esters de l'acide adipique, des huiles de ricin, etc,
   - on choisit la charge parmi le groupe formé par des dérivés de l'acide silicique, le gypse, le talc, des charbons actifs, des poudres de métaux, des craies, des kaolins, les noirs de carbone, etc,
   - on choisit l'auxiliaire, adjuvant ou additif parmi
     a) des agents conférant de l'adhésivité, plus particulièrement des composés du silane, qui peuvent complémentairement encore contenir au moins un groupe réactif, comme les radicaux époxyde, isocyanate, amine, des doubles liaisons,
     b) des colorants ou des pigments,
     c) des catalyseurs de polyuréthannes habituels, tels que, par exemple, des composés du plomb et/ou de l'étain, avec co-utilisation éventuelle d'autres catalyseurs de polyuréthannes, plus particulièrement des catalyseurs contenant des groupes amine tertiaire,
     d) des agents d'absorption des UV, ou des stabilisants, tels que des anti-oxygène phénoliques, des agents de protection vis-à-vis de la lumière,
     e) des additifs tensioactifs ou surfactifs, tels que des émulsifs,
     f) des agents d'ignifugation, et
     g) des substances à activité fongistatique et/ou bactériostatique.

8. Procédé de fabrication d'une colle thermofusible réactive suivant l'une des revendications 1 à 7, caractérisée en ce que, dans des conditions d'exclusion d'eau, on utilise au préalable la matière thermoplastique ou on prépare cette dernière in situ, puis on la chauffe jusqu'à son point de ramollissement, on incorpore alors le liant à base d'isocyanate et l'agent thixotropique de manière à obtenir un mélange homogène et on laisse enfin refroidir le mélange ainsi préparé jusqu'à la température ambiante, où on choisit le rapport de mélange de la matière thermoplastique précitée et du liant concerné de telle façon que la teneur en isocyanate, rapporté à la colle thermofusible globale, fluctue dans la plage de 0,01 à 10% en poids.

9. Procédé suivant la revendication 8, caractérisé en ce que la matière thermoplastique et/ou le liant contiennent au moins un plastifiant.

10. Procédé suivant la revendication 9, caractérisé en ce que l'on prépare la matière thermoplastique in situ avec au moins un plastifiant.

11. Procédé suivant l'une des revendications 8 à 10, caractérisé en ce qu'avant le refroidissement jusqu'à la température ambiante, on incorpore encore, l'un après l'autre, au moins un additif et/ou au moins une charge, de façon à obtenir un mélange homogène.

12. Utilisation de la colle thermofusible réactive suivant l'une des revendications 1 à 7, pour le collage et/ou l'étanchéisation d'un ou plusieurs matériaux de nature ou structure identique ou différente, de manière à obtenir un ensemble composite ou stratifié.

13. Utilisation suivant la revendication 12, caractérisée en ce que les matériaux à coller et/ou à étancher se choisissent parmi le groupe constitué
   - du verre, plus particulièrement des vitres ou carreaux pour véhicules automobiles, des verres feuilletés, des vitrages pour façades,
   - d'un métal, qui peut être laqué, peint ou verni, métallisé ou revêtu et/ou prétraité de n'importe quelle façon, par exemple des carrosseries de véhicules automobiles,
   - d'un alliage de métal, qui peut être laqué, peint ou verni, métallisé ou revêtu et/ou prétraité de n'importe quelle manière, par exemple des carrosseries de véhicules automobiles,
   - d'une matière plastique,
   - d'un matériau de construction, plus particulièrement des pierres, le béton, le mortier, des revêtements de chaussées ou voies carrossables, et
   - du bois.

14. Utilisation suivant la revendication 12, caractérisée en ce que l'on applique la colle thermofusible à l'endroit où cette colle doit être appliquée, à l'aide d'au moins un dispositif destiné à la travailler, par exemple à l'aide d'une cartouche qui peut être chauffée ou qui a été préchauffée, ou à l'aide d'un appareil d'application de colle thermofusible, à une température convenant aux applications envisagées, située aux approches du point de ramollissement, sur les matériaux à coller et/ou à étancher.

15. Utilisation suivant la revendication 12, caractérisée en ce que l'on applique la colle thermofusible sous la forme d'un profilé de colle, à la température ambiante, sur les matériaux à coller et/ou à étancher.

16. Utilisation suivant la revendication 15, caractérisée en ce que le profilé de colle possède la forme d'un cordon ou d'une bande, où, en vue de garantir les stabilités dimensionnelles, un fil ou un treillis, grillage ou réseau peut être noyé dans le cordon ou la bande.